# EUROPÄISCHE PATENTSCHRIFT

(11) **EP 1 444 460 B1**
(45) Veröffentlichungstag und Bekanntmachung des Hinweises auf die Patenterteilung: **30.04.2014**
(21) Anmeldenummer: 01971707.3
(22) Anmeldetag: 14.09.2001
(51) Int. Cl.: F16L 39/00, F16L 58/08

(54) **DOPPELLAGENROHR ZUM FLUIDISCHEN TRANSPORT VON ABRASIVEN FESTSTOFFEN**
DOUBLE-SKINNED TUBE FOR THE FLUID TRANSPORT OF ABRASIVE SOLIDS
TUBE DOUBLE COUCHE DESTINE AU TRANSPORT FLUIDIQUE DE MATIERES SOLIDES ABRASIVES

(30) Priorität: 04.09.2001 DE 10143187
(43) Veröffentlichungstag der Anmeldung: 11.08.2004
(73) Patentinhaber: Esser- Werke KG, 59581 Warstein (DE)
(72) Erfinder: ESSER, Alexander, 59581 Warstein (DE)
(74) Vertreter: Griepenstroh, Jörg
(86) Internationale Anmeldenummer: PCT/DE2001/003526
(87) Internationale Veröffentlichungsnummer: WO 2003/027564

(56) Entgegenhaltungen:
- EP-A1- 0 122 382
- FR-A- 1 494 638
- FR-A- 2 120 636
- FR-A1- 2 371 632
- GB-A- 1 244 938

## Beschreibung

Die Erfindung betrifft ein Verfahren zur Herstellung eines Doppellagenrohrs zum fluidischen Transport von abrasiven Feststoffen, insbesondere von Beton, gemäß den Merkmalen im Oberbegriff des Patentanspruchs 1.

Die EP 0 122 382 beschreibt ein Verfahren mit den Merkmalen des Oberbegriffs des Anspruchs 1. Die EP 0 122 382 A1 offenbart einen Rohrbogen aus einem Doppellagenrohr zum fluidischen Transport von abrasiven Feststoffen, das ein mit einer harten Außenschicht und einer weichen Innenschicht ausgestattetes Innenrohr, ein Außenrohr aus einem schweißbaren Stahl, endseitige Kupplungsbunde aus einem schweißbaren Stahl und eine Wärme dämmende Schicht zwischen dem Innenrohr und dem Außenrohr aufweist

Die innerhalb des Innenrohrs angeordnete Innenschicht fungiert dabei als Opferschicht, welche sich zunächst durch den Abrieb vorbeiströmender Feststoffe zumindest bereichsweise abnutzt. Insbesondere über die aufgezeigte Krümmung des Rohrbogens lässt sich die Geschwindigkeit der Abnutzung durch den sich innerhalb des Innenrohrs einstellenden Aufprallwinkel der Feststoffe beeinflussen.

Nachdem die weiche Innenschicht zumindest bereichsweise abgenutzt ist, wird die die Wandung des Innenrohrs durch Abrieb ausgedünnt. Der Abriebprozess wird erst verlangsamt, wenn die harte Außenschicht des Innenrohrs erreicht ist. Hierbei erfüllt die zwischen dem Außenrohr und dem Innenrohr angeordnete Schicht aus einem feuerfesten Keramik-Mörtel neben ihrer Wärme dämmenden Eigenschaft vor allem eine die dünne Außenschicht des Innenrohrs stützende Aufgabe.

Der beschrieben Aufbau verlangt, dass das Innenrohr zunächst zumindest eine harte Außenschicht erhält, bevor es in das Außenrohr eingebracht werden kann.

Aus der FR 2371632 A1 geht ein Doppellagenrohr zum fluidischen Transport von abrasiven Feststoffen hervor, welches ein aus wärme- und verschleißfesten ineinander greifenden Kacheln gebildetes Innenrohr, ein Außenrohr aus einem schweißbaren Stahl und eine aus einem aufschäumbaren Bogen- oder Blattmaterial gebildete Schicht zwischen dem Innenrohr und dem Außenrohr aufweist.

Weitere bekannte Doppellagenrohre weisen ein gehärtetes Innenrohr auf, um dem zu transportierenden Feststoff einen möglichst langen Verschleißwiderstand entgegen zu setzen. Die Dicke der von der inneren Oberfläche ausgehenden Härteschicht hängt im Wesentlichen von dem Einsatzort eines Doppellagenrohrs ab. Bei vergleichsweise dünnwandigen Doppellagenrohren, wie sie zum Transport von Beton überwiegend eingesetzt werden, ist in der Regel die etwa 2 mm dicke Wand durchgehend gehärtet.

Das Innenrohr wird von einem Außenrohr ummantelt, das schlagfest und damit auch schweißbar ist. Die Schlagfestigkeit ist im Hinblick insbesondere auf den Transport eines Doppellagenrohrs vom Herstellerwerk zum Montageort von Bedeutung, da ein solcher Transport in aller Regel einer rauen Handhabung unterworfen ist.

An den Enden eines Doppellagenrohrs sind meistens Kupplungsbunde befestigt, die über Spannschellen oder Schraubbolzen mit Muttern mit benachbarten Doppellagenrohren zu einem Rohrstrang verbunden werden.

Aufgrund des Sachverhalts, dass die zur Herstellung eines Doppellagenrohrs zum Einsatz gelangenden Rohre vergleichsweise große Fertigungstoleranzen aufweisen, liegen die Innenrohre meistens nur punktuell an den Außenrohren an. Die nach dem Zusammenfügen der Innenrohre mit den Außenrohren an den Innenrohren zu ihrer Härtung aufgebrachte Wärme findet dann an den Kontaktstellen im Vergleich zu den Bereichen, wo Luftspalte vorhanden sind, deutlich bessere Wärmeübergangsbedingungen. Mit anderen Worten, die Wärme fließt nach außen ab. Dies hat zur Folge, dass einige Bereiche der Innenrohre auf die für einen Härtevorgang notwendige Temperatur von 830° C gebracht werden können und andere Bereiche nicht. Wird dann das Innenrohr zum Härten abgeschreckt, werden Bereiche des Innenrohrs gehärtet und andere Bereiche aufgrund nicht ausreichender Erwärmungstemperatur nicht oder zumindest nicht in dem erforderlichen Umfang. Der Verschleißwiderstand von Doppellagenrohren ist mithin nicht in allen inneren Oberflächenbereichen identisch. Folglich ergeben sich z.B. durch Überhitzung Grobkörnigkeit, durch erhöhte Spannungen zwischen unterschiedlich erwärmten Bereichen Risse und insbesondere auch ein Aufpellen der Innenrohre, wenn der zu transportierende Beton die verschlissenen Innenrohre nach innen umbördelt, so dass es dann zu Pfropfenbildungen mit einer Unterbrechung des Transportflusses kommen kann.

Der Erfindung liegt - ausgehend vom Stand der Technik - die Aufgabe zugrunde, ein Verfahren zur Herstellung eines Doppellagenrohrs aufzuzeigen, mit welchem sowohl über die Länge als auch über den Umfang gesehen eine gleichmäßige Erwärmung des Innenrohrs gewährleistet und damit auch eine gleichmäßigere Härte des Innenrohrs erreicht werden kann, so dass ohne zusätzlichen Materialaufwand eine erhöhte Widerstandsfähigkeit gegenüber dem Transport abrasiver Feststoffe vorhanden ist.

Die Lösung dieser Aufgabe besteht in den Merkmalen des Patentanspruchs 1.

Die Wärme dämmende Schicht zwischen dem Innenrohr und dem Außenrohr bildet bei der Erwärmung des Innenrohrs eine Barriere, welche verhindert, dass Wärme in einem nennenswerten Umfang vom Innenrohr zum Außenrohr abfließen kann. Die aufgebrachte Wärme bleibt vielmehr im Innenrohr mit der Folge, dass das Innenrohr, insbesondere bei dünnen Rohrwänden, innerhalb eines sehr engen Temperaturfensters gleichmäßig erwärmt werden kann. Erfolgt danach die Abschreckung des Innenrohrs, ist somit eine überaus gleichmäßige Härte über den gesamten Umfang sowie die Länge eines Innenrohrs vorhanden. Die Standzeit eines Doppellagenrohrs wird auf diese Weise deutlich verbessert.

Ein weiterer Vorteil der Erfindung macht sich dann bemerkbar, wenn die endseitig eines Doppellagenrohrs vorgesehenen Kupplungsbunden gleich welcher Konfiguration auch immer an das Außenrohr angeschweißt werden sollen. Insbesondere bei dünnwandigen Außenrohren kann dann die Schweißhitze nicht mehr über die Trennschicht zwischen dem Außenrohr und dem Innenrohr in einer noch relevanten Größe auf das Innenrohr einwirken und dort die Härte wieder aufheben. Gegebenenfalls ist es beim Anschweißen des lediglich notwendig, insbesondere bei einem dünnwandigen Innenrohr, noch eine geringfügige Kühlmaßnahme innenseitig durchzuführen.

Der wesentliche Vorteil der Erfindung ist also neben der höheren Standzeit eines Doppellagenrohrs der, dass aufgrund der Wärme dämmenden Schicht deutlich geringere Wärmeenergie aufgebraucht werden muss, um die vorteilhafte Härtetemperatur oberhalb des Ac3-Punkts zu erreichen und dass auf der anderen Seite auch keine große Kühlenergie mehr erforderlich ist, um beim Anschweißen von Kupplungsbunden zu verhindern, dass die vorher erzeugte Härteschicht in einem Innenrohr wieder aufgehoben wird.

Eine vorteilhafte Ausführungsform der Erfindung wird in den Merkmalen des Patentanspruchs 2 gesehen.

Danach wird die Wärme dämmende Schicht zwischen dem Innenrohr und dem Außenrohr durch eine auf die äußere Oberfläche des Innenrohrs und/oder auf die innere Oberfläche des Außenrohrs aufgebrachte Beschichtung aus einem verbrennbaren nichtmetallischen Material gebildet In praktischen Versuchen hat es sich als vorteilhaft erwiesen, wenn auf die äußere Oberfläche eines Innenrohrs eine Rostschutzfarbe aufgebracht wird, welche dann aufgrund der Wärmeeinwirkung beim Härten verbrennt und eine eindeutige Trennschicht umfangsseitig des Innenrohrs bewirkt.

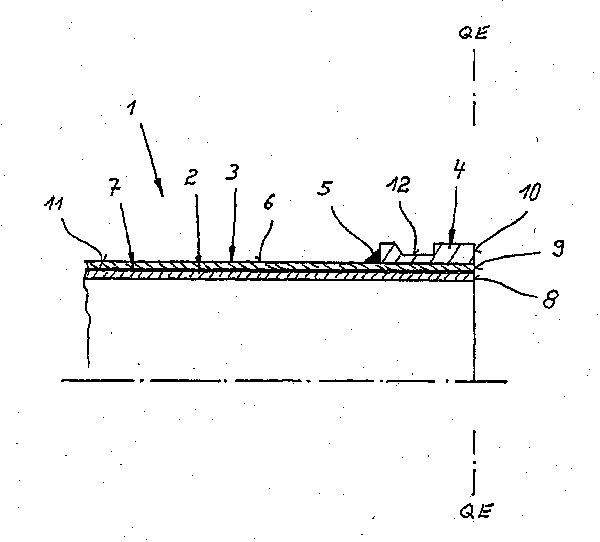

Die Erfindung ist nachfolgend anhand eines in der Zeichnung veranschaulichten Ausführungsbeispiels näher erläutert.

Die Zeichnung zeigt im vertikalen Längsschnitt eine Hälfte eines Endabschnitts eines Doppellagenrohrs 1 zum fluidischen Transport von abrasiven Feststoffen, insbesondere von Beton.

Das Doppellagenrohr 1 umfasst ein gehärtetes Innenrohr 2, ein ungehärtetes Außenrohr 3 sowie Kupplungsbunde 4 an den Enden zur Verbindung mit benachbarten Doppellagenrohren 1. Da nur ein Ende eines Doppellagenrohrs 1 dargestellt ist, ist auch nur ein Kupplungsbund 4 veranschaulicht. Der Kupplungsbund 4 ist durch eine Kehlnaht 5 mit der äußeren Oberfläche 6 des Außenrohrs 3 verschweißt.

Zwischen dem Innenrohr 2 und dem Außenrohr 3 befindet sich eine Wärme dämmende Schicht 7. Diese Schicht 7 ist aus einem verbrennbaren nichtmetallischen Material, wie z. B. aus einer Rostschutzfarbe gebildet, die auf die äußere Oberfläche 11 des Innenrohrs 2 vor dem Fügen mit dem Außenrohr 3 aufgebracht wurde.

Das Innenrohr 2 ist durch mindestens einen Härtevorgang im Außenrohr 3 festgelegt.

Beim Ausführungsbeispiel liegen die Stirnseiten 8-10 des Innenrohrs 2, des Außenrohrs 3 und jedes Kupplungsbunds 4 in derselben Querebene QE.

In jedem Kupplungsglied 4 befindet sich eine umlaufende, im Querschnitt trapezförmige Kupplungsnute 12.

### Bezugszeichenaufstellung

- 1 -: Doppellagenrohr
- 2 -: Innenrohr v. 1
- 3 -: Außenrohr v. 1
- 4 -: Kupplungsbunde v. 1
- 5 -: Kehlnaht
- 6 -: äußere Oberfläche v. 3
- 7 -: Schicht zw. 2 u. 3
- 8 -: Stirnseite v. 2
- 9 -: Stirnseite v. 3
- 10 -: Stirnseite v. 4
- 11 -: äußere Oberfläche v. 2
- 12 -: Kupplungsnute in 4

- QE -: Querebene

## Patentansprüche

1. Verfahren zur Herstellung eines Doppellagenrohr (1) zum fluidischen Transport von abrasiven Feststoffen, insbesondere von Beton, das ein stählernes Innenrohr (2), ein Außenrohr (3) aus einem schweißbaren Stahl, endseitige Kupplungsbunde (4) aus einem schweißbaren Stahl und eine Wärme dämmende Schicht (7) zwischen dem Innenrohr (2) und dem Außenrohr (3) aufweist, **dadurch gekennzeichnet, dass** das Innenrohr (2) im zusammengefügten Zustand mit dem Außenrohr (3) durch eine zu dessen Härtung aufgebrachte Härtetemperatur oberhalb des Ac3-Punktes und anschließender Abschreckung mit einer gehärteten Innenschicht versehen wird.

2. Verfahren nach Patentanspruch 1, bei welchem die Wärme dämmende Schicht (7) zwischen dem Innenrohr (2) und dem Außenrohr (3) durch eine auf die äußere Oberfläche (11) des Innenrohrs (2) und/oder auf die innere Oberfläche des Außenrohrs (3) aufgebrachte Beschichtung aus einem verbrennbaren nichtmetallischen Material gebildet wird.

## Claims

1. Method for manufacturing a double-skinned tube (1) for the fluid transport of abrasive solids, in particular of concrete, which has a steel inner tube (2), an outer tube (3) made of a weldable steel, terminal coupling collars (4) consisting of a weldable steel and a thermal insulating layer (7) between the inner tube (2) and the outer tube (3), **characterised in that** the inner tube (2), is provided with a hardened inner layer when joined to the outer tube (3) by applying a hardening temperature for hardening said inner tube which is above the Ac3-point and by subsequent quenching.

2. Method according to claim 1, wherein the thermal insulating layer (7) between the inner tube (2) and the outer tube (3) is formed by a coating of a combustible non-metallic material applied to the outer surface (11) of the inner tube (2) and/or to the inner surface of the outer tube (3).

## Revendications

1. Procédé de fabrication d'un tube à double couche (1) destiné au transport fluidique de matériaux solides abrasifs, en particulier de béton, lequel tube présente un tube interne en acier (2), un tube externe (3) constitué d'un acier soudable, des collets de couplage terminaux (4) formés d'un acier soudable et une couche isolante (7) entre le tube interne (2) et le tube externe (3), **caractérisé en ce que** le tube interne (2) à l'état assemblé avec le tube externe (3) est pourvu d'une couche interne durcie par application d'une température de durcissement supérieure au point Ac3 lors de son durcissement, le tout suivi d'une trempe.

2. Procédé selon la revendication 1, dans lequel la couche isolante (7) entre la couche interne (2) et la couche externe (3) est formée d'un revêtement constitué d'un matériau non métallique combustible appliqué sur la surface externe (11) du tube interne (2) et/ou sur la surface interne du tube externe (3).
